# DEMANDE DE BREVET EUROPEEN

(11) **EP 1 022 241 A1**
(43) Date de publication de la demande: **26.07.2000**
(21) Numéro de dépôt: 00400192.1
(22) Date de dépôt: 25.01.2000
(51) Int. Cl.: B65G 67/54, B65G 67/24, B65G 67/40, B65F 9/00, B65G 69/22

(54) **Nacelle d'ouverture des portes d'un camion en phase de déchargement**

(30) Priorité: 25.01.1999 FR 9900754
(71) Demandeur: La Routière de l'Est Parisien R.E.P., 95190 Goussainville (FR)
(72) Inventeur: Rochon, Marcel, 95190 Goussainville (FR)
(74) Mandataire: Lhuillier, René

(57) **Abrégé**

La nacelle (13) est montée sur un plateau télescopique (12) lui-même en bout d'une plate-forme télescopique (11) qui lui permet de se positionner en surplomb au-dessus d'une fosse de recueil et à proximité des portes arrières (4) d'un camion (1). Des portillons de sécurité (10), manoeuvrés par des vérins (8) sont en appui contre les portes arrières (4) pour en limiter l'ouverture.

Application aux sas de déchargement de produits en vrac dans une fosse de recueil.

## Description

L'invention concerne le déchargement de produits en vrac à partir d'un camion ou d'une benne et porte plus précisément sur une nacelle permettant l'ouverture des portes arrières du camion au cours de cette phase de déchargement.

Pour le vidage d'un camion chargé de produits en vrac, par exemple des ordures, dans une fosse de recueil, le camion doit reculer dans un sas de déchargement sur un quai jusqu'à ce que les roues arrières viennent en appui contre un butoir en limite de quai. Les produits sont alors poussés de l'intérieur vers l'extérieur par un mécanisme quelconque, ou encore sont évacués par gravité par basculement de la benne. Préalablement à cette opération, le chauffeur doit bien évidemment ouvrir les portes arrières du véhicule et donc stopper celui-ci avant qu'il n'ait atteint la position de déchargement, cela pour pouvoir accéder aux portes arrières avant que celles-ci ne surplombent la fosse. Puis il termine la phase de recul du camion avant le vidage des produits.

Cette façon de procéder présente plusieurs inconvénients. Tout d'abord la nécessité de reculer le véhicule en deux fois prend du temps et occasionne des allées et venues fâcheuses pour le chauffeur. Et puis et surtout, lors de l'ouverture des portes au-dessus du quai, une quantité variable de produits en vrac tombe immanquablement sur le sol, particulièrement si le véhicule est copieusement chargé. Cela peut éventuellement gêner la phase finale de recul du camion, mais cela nécessite aussi pour le personnel d'assurer, après le départ du véhicule, le nettoyage du quai. Ces diverses manoeuvres et manipulations génèrent donc des pertes de temps incompatibles avec des rotations rapides et efficaces exigées dans ce type d'installations. L'invention apporte une solution à ce problème en proposant un système qui s'affranchit des inconvénients précités.

A cette fin l'invention a pour objet une nacelle d'ouverture des portes d'un camion en phase de déchargement de produits en vrac dans une fosse de recueil, le camion étant en appui contre un butoir en limite de quai, ladite nacelle étant montée sur au moins un élément télescopique ou mobile lui permettant de se positionner en surplomb au-dessus de la fosse de recueil et à proximité des portes arrières du camion. Des moyens amovibles complémentaires limitent l'ouverture desdites portes.

Avantageusement, une plate-forme télescopique ou mobile s'étend sur le côté d'un sas de déchargement du camion, et porte en son extrémité un plateau télescopique ou mobile pouvant se déplacer perpendiculairement à la plate-forme ou de toute autre manière et qui reçoit la nacelle.

Selon une caractéristique particulière de l'invention, les moyens amovibles complémentaires sont constitués de portillons de sécurité manoeuvrés par des vérins, lesdits portillons venant en appui contre les portes arrières du camion pour en limiter l'ouverture.

D'autres caractéristiques particulières et avantages de l'invention ressortiront de la description qui va suivre d'un exemple non limitatif de réalisation dans lequel il est fait référence aux dessins annexés qui représentent :
Figure 1, une vue générale en élévation d'un camion sur un quai en phase d'approche de la fosse de recueil et figure 4 une vue de l'arrière du camion et de la nacelle en position d'ouverture des portes.
figures 2 et 5, des vues du dessus de la nacelle et du camion respectivement en position déployée.
Figures 3 et 6, des vues de l'arrière du camion, en élévation, respectivement avec les portillons ouverts et les portillons fermés.

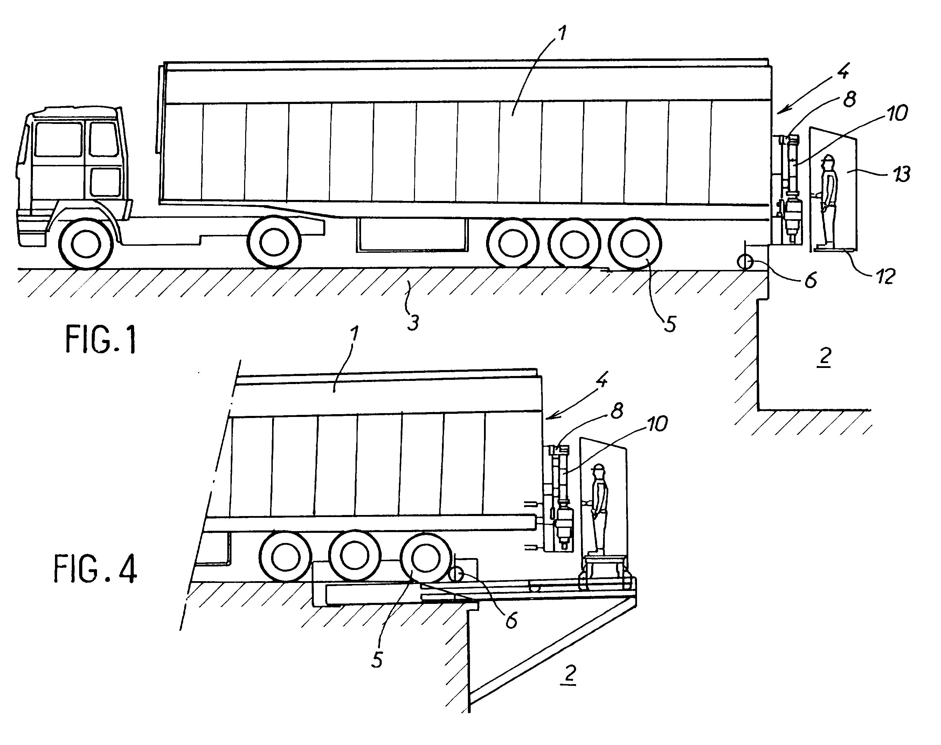

On a représenté aux figures 1 à 3 un camion 1, chargé de produits en vrac, sur un sas de déchargement 3, à l'approche d'une fosse de recueil 2. On voit à la figure 1 que les portes arrières 4 du camion sont à l'aplomb de l'extrémité de quai, les dernières roues arrières 5 du véhicule n'ayant pas encore atteint le butoir 6.

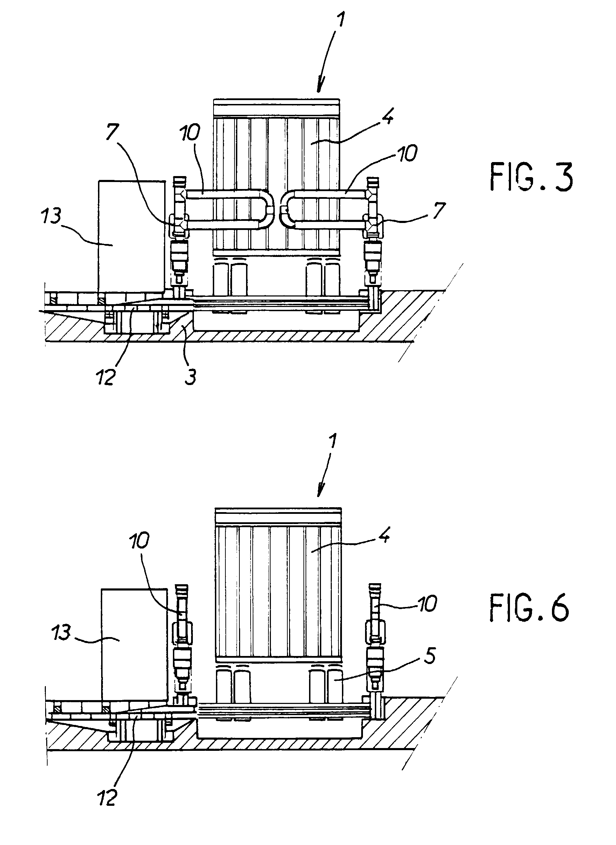

De part et d'autre du camion sont disposées deux consoles fixes renfermant chacune un vérin 8 et ses mécanismes, sur l'extrémité 9 duquel est articulé un portillon de sécurité 10. Dans la position représentée à la figure 3 les deux portillons 10 sont en appui contre les portes arrières 4 du camion, et constituent un moyen amovible de limitation de l'ouverture desdites portes.

Sur un des côtés du sas de déchargement 3, le long d'une structure fixe 7 s'étend une plate-forme télescopique 11, encastrée dans le quai, susceptible de se déplacer parallèlement au camion pour venir en surplomb au-dessus de la fosse de recueil 2. L'extrémité de cette plate-forme porte un plateau télescopique 12 pouvant se déplacer perpendiculairement à la plate-forme. Ledit plateau reçoit une nacelle 13, équipée d'organes de commandes de ces éléments télescopiques, dans laquelle prend place l'opérateur, et qui lui sert de protection et de garde-fou.

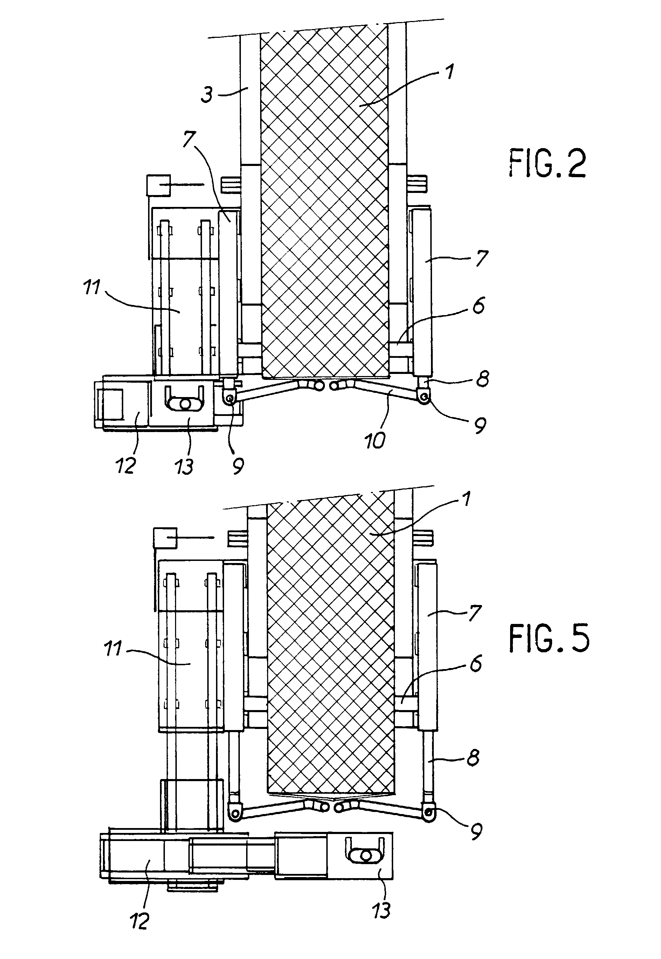

On voit à la figure 2 que la nacelle est en position d'attente au niveau du bord du quai et sur le côté du camion 1.

Celui-ci poursuit son recul jusqu'à ce que les roues arrières 5 viennent en appui contre le butoir 6, comme le montre la figure 4. Dans cette position tout l'arrière du camion se trouve donc en surplomb au-dessus de la fosse 2. Au cours de cette dernière phase de recul, les portes arrières 4 repoussent les portillons 10, les vérins 8 restant sous contrôle. Durant cette manoeuvre les portillons restent appliqués contre les portes.

Ensuite le chauffeur va vers la nacelle 13 et déploie la plate-forme télescopique 11, puis le plateau télescopique 12 jusqu'à ce que la nacelle 13 se trouve dans la position représentée à la figure 5. Le chauffeur est ainsi en mesure d'accéder aux portes 4, et dans un premier temps de les entrouvrir. Les portillons 10 limitent une ouverture partielle des portes, de sorte que les produits empilés à proximité de celle-ci puissent tomber dans la fosse et ainsi également protéger les mains du chauffeur. Reste ensuite à écarter les portillons grâce aux vérins 8 pour pouvoir laisser s'ouvrir totalement les portes et procéder au déchargement complet du véhicule, après que la nacelle se soit de nouveau repositionnée sur le côté. On voit à la figure 6 les portillons 10 écartés et la nacelle 13 dégagée de l'arrière du véhicule.

Grâce à ce système, les opérations d'ouverture des portes se font rapidement, en toute sécurité pour l'opérateur, et sans chute du produit en vrac sur le quai.

## Revendications

1. Nacelle d'ouverture des portes d'un camion en phase de déchargement de produits en vrac dans une fosse de recueil, le camion étant en appui contre un butoir en limite de quai caractérisé en ce que ladite nacelle (13) est montée sur au moins un élément télescopique ou mobile (11, 12) lui permettant de se positionner en surplomb au-dessus de la fosse de recueil et à proximité des portes arrières (4) du camion (1), et en ce que des moyens amovibles complémentaires (8, 10) limitent l'ouverture desdites portes.

2. Nacelle d'ouverture selon la revendication 1 caractérisé en ce que une plate-forme télescopique (11) s'étend sur le côté d'un sas de déchargement (3) du camion, et porte en son extrémité un plateau télescopique (12) pouvant se déplacer perpendiculairement à la plate-forme et qui reçoit ladite nacelle (13).

3. Nacelle d'ouverture selon la revendication 1 caractérisé en ce que les moyens amovibles complémentaires sont constitués de portillons de sécurité (10) manoeuvrés par des vérins (8), lesdits portillons venant en appui contre les portes arrières (4) du camion pour en limiter l'ouverture.

4. Nacelle d'ouverture selon la revendication 3 caractérisé en ce que les vérins (8) et leurs mécanismes sont logés dans des structures fixes (7) disposées de part et d'autre du camion.
